# EUROPEAN PATENT APPLICATION

(11) **EP 2 685 612 A2**
(43) Date of publication of application: **15.01.2014**
(21) Application number: 13176055.5
(22) Date of filing: 11.07.2013
(51) Int. Cl.: H02K 5/20

(54) **Electric machine cooling arrangement and method**

(30) Priority: 12.07.2012 US 201213547658
(71) Applicant: DEERE & COMPANY, Moline, Illinois 61265-8098 (US)
(72) Inventor: Love, Galen R., Cherryvale, KS Kansas 67335 (US); McKinzie, Kyle K., Altamont, KS Kansas 67330 (US)
(74) Representative: Münch, Christian

(57) **Abstract**

An electric machine connectable to a driven device of a vehicle, the electric machine including a stator and a housing (24) containing the stator. The housing (24) has at least one cooling channel (36) around at least a portion of an internal circumference of the housing (24). The cooling channel (36) is defined by a first housing portion (26) and a second housing portion (28), the first housing portion (26) being sealed to the second housing portion (28).

## Description

### Filed of the Invention

The present invention relates to electric machines such as electric motors and generators, and, more particularly, to a method and arrangement for cooling a stator in electric machines.

### Background of the Invention

An electric motor is an electromagnetic/mechanical device that converts electrical energy into mechanical energy. Conversely an electrical generator is an electromagnetic/mechanical device that converts mechanical energy into electrical energy. Electrical machines such as motors and generators operate through the interaction of magnetic fields and current carrying conductors generate the force or electricity respectively. Electric motors are found in applications as diverse as pumps, blowers, fans, machine tools, household appliances, power tools, disc drives in computers and the like. Electrical motors come in various sizes from small motors that are utilized in watches to rather large electric motor/generators utilized in locomotive engines.

A rotor of an electric motor is typically the rotating part of the motor and it rotates because the magnetic fields are arranged in the motor so that the torque is developed about the axis of the rotor. A stator of an electric machine is typically stationary, particularly relative to an outer housing of the electric machine. Electrical systems typically include electrical power generators and motors which have permanent magnet or electromagnetic stators. Heat is generated by the changing magnetic fields which are present in the stator causing the temperature to rise in the stator and it is desirable to cool the stator to protect the magnets or electromagnets from damage and to increase the electric machine power density to provide more power from a smaller physically sized electric machine.

Conventional cooling methods include convective air or oil circulation through the machine. It is also known to cool a stator by utilizing cooling holes in the housing so that air or fluid may travel therethrough to remove heat.

The problem with the prior art is that, in many cases, effective cooling for the stator is not provided around the stator, particularly near the outer surfaces of the stator. In cases where cooling around the stator outer surface has been provided, it typically requires the use of a core in the process of casting the electric machine housing to produce the cooling channel, which adds cost and complexity to the electric machine.

What is needed in the art is a cost effective method of creating the cooling channel around the stator outer surface for cooling the stator of an electric machine.

### Summary

The present invention provides a method and apparatus for cooling a stator in an electric machine.

The invention in one form is directed to an electric machine coupled to a driven device in a vehicle, the electric machine including a stator and a housing containing the stator. The housing has at least one cooling channel around at least a portion of an internal circumference of the housing. The cooling channel is defined by a first housing portion and a second housing portion. The first housing portion being sealed to the second housing portion.

The invention in another form is directed to a vehicle including a driven device and an electric machine coupled to the driven device. The electric machine including a stator and a housing containing the stator. The housing has at least one cooling channel around at least a portion of an internal circumference of the housing. The cooling channel is defined by a first housing portion and a second housing portion. The first housing portion being sealed to the second housing portion.

The invention in yet another form is directed to a method of cooling an electric machine in a vehicle, the method including the step of moving a fluid though at least one channel formed in a housing containing a stator. The at least one channel being arranged around at least a portion of an internal circumference of the housing. The channel being defined by a first housing portion and a second housing portion. The first housing portion being sealed to the second housing portion.

### Brief Description of the Drawings

The above-mentioned and other features and advantages of this invention, and the manner of attaining them, will become more apparent and the invention will be better understood by reference to the following description of an embodiment of the invention taken in conjunction with the accompanying drawings, wherein:
Fig. 1 illustrates a vehicle that utilizes an embodiment of an electric machine using a cooling method of the present invention;
Fig. 2 is an electric machine utilized in the vehicle of Fig. 1;
Fig. 3 is a cross-sectional view of part of the housing of the electric machine of Fig. 2;
Fig. 4 is an exploded cross-sectional view of the housing of Fig. 3; and
Fig. 5 is an assembled cross-sectional plan view of the housing of Figs 3 and 4.

Corresponding reference characters indicate corresponding parts throughout the several views. The exemplification set out herein illustrates one embodiment of the invention, in one form, and such exemplification is not to be construed as limiting the scope of the invention in any manner.

### Detailed Description

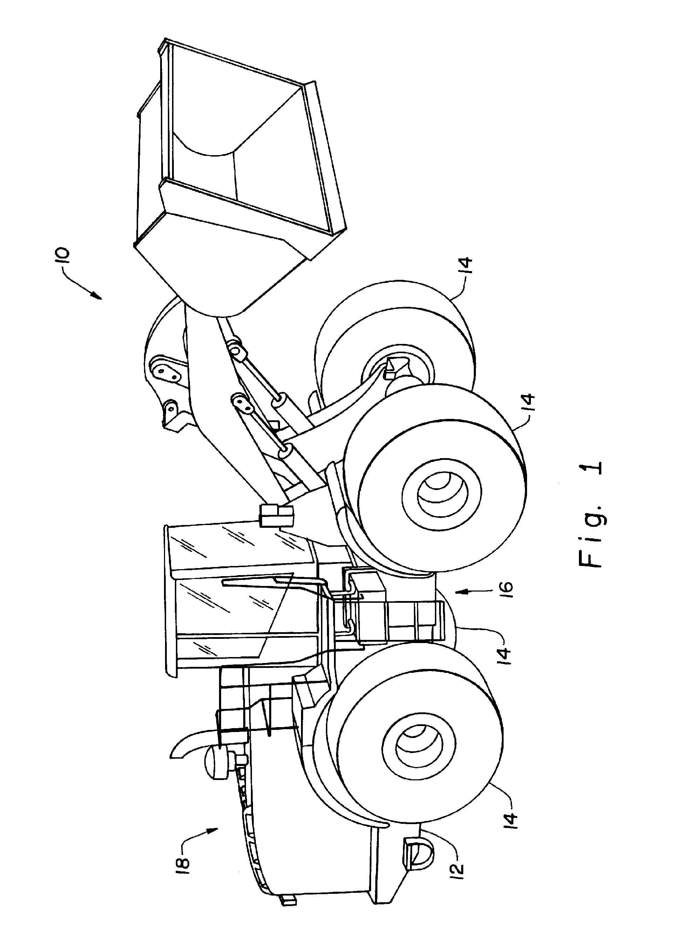

Referring now to the drawings, and more particularly to Fig. 1, there is illustrated a vehicle 10, which may be in the form of an agricultural machine, a construction machine, a forestry machine or other vehicle. Vehicle 10 includes a chassis 12 with ground engaging devices 14 that are either directly or indirectly driven by at least one electric machine 16, which may be in the form of an electric generator/alternator or an electric motor, which supplies or consumes electrical power. The electrical power may come from a stored energy source such as a battery or capacitor. Likewise the electrical power may come from a utility and be generated in any known manner. For purposes of this example vehicle 10 will be considered to have an engine 18 from which at least a portion of the electrical power ultimately comes from. For the sake of simplicity, electric machine 16 will be considered an electric motor 16, with the construct of the present invention being also applicable to other rotating electric machines. Electrical power from the power source is applied, under the control of the machine operator, to electric motor 16 to drive driven devices 14.

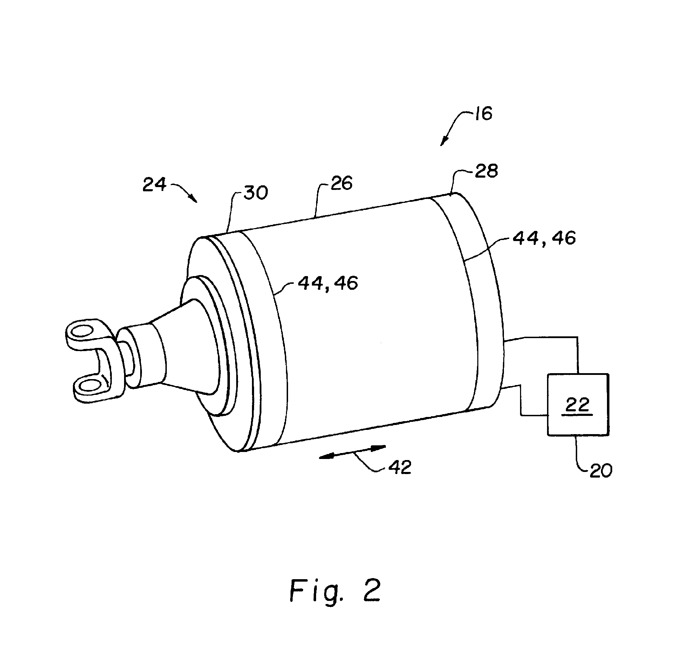

Now, additionally referring to Fig. 2 there is illustrated electric motor 16. Mechanical power from electric motor 16 may be supplemental to a mechanical drive that provides power to driven device 14 or electric motor 16 may be the sole driver of driven devices 14. Electric motor 16 is cooled by a fluid coolant supply 20 having fluid 22 supplied therefrom and may include an external pump, supply tank and cooling system, not shown.

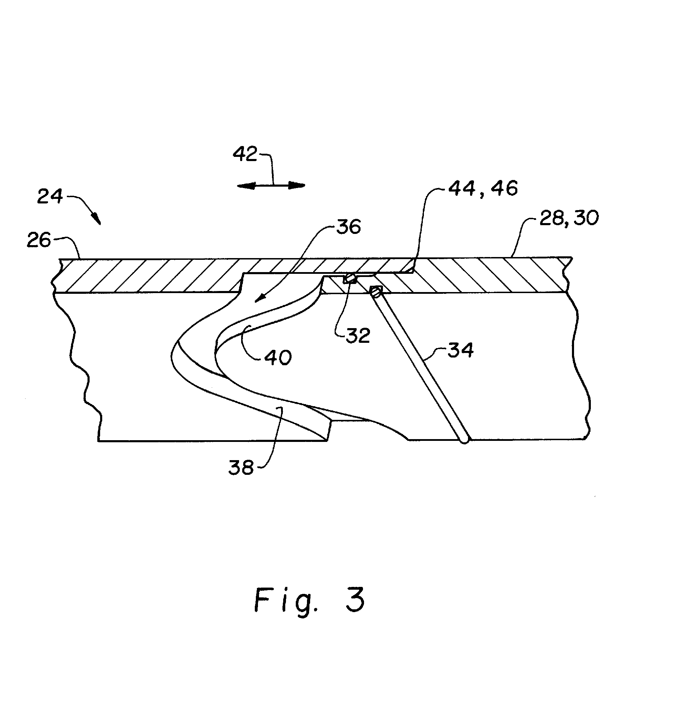

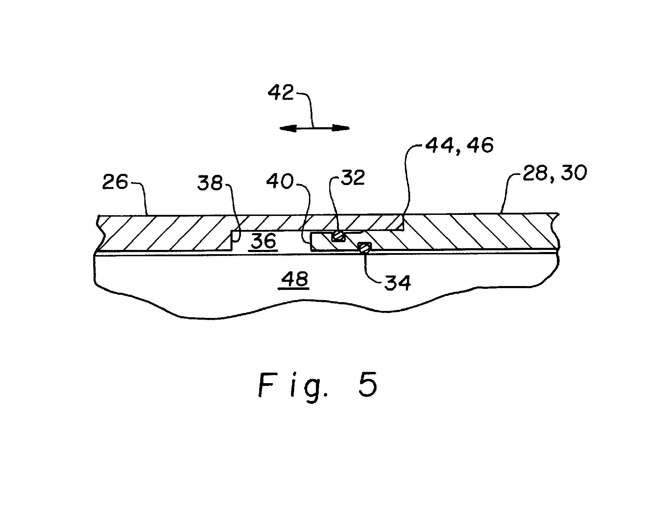

Electric motor 16 includes a shaft, a rotor and a stator 48. A housing 24 encompasses the rotor and stator 48 and contains a fluid 22, with housing 24 providing part of a fluid flow path. Housing 24 includes a first housing portion 26, a second housing portion 28 and a third housing portion 30. Housing portions 28 and 30 may be different as shown in Fig. 2, or they may be substantially identical. Additionally, in another form, either housing portion 28 or 30 may be combined or permanently connected as one piece with first housing portion 26. The section of housing portions 28 and 30 that interface with housing portion 26, for the sake of clarity, will be considered substantially similar as indicated in Figs. 3-5, even if other sections of housing portions 28 and 30 have other attributes, such as bearings, wiring connections, fluid connections and the like.

Seals 32 and 34 are here shown associated with housing portions 28 and 30, although it is contemplated that seal 32 may be associated with housing portion 26. Seal 34 is located to help direct the flow of fluid 22 in a cooling channel, which may be annular in nature or not annular and may be a serpentine shaped cooling channel 36. Seals 32 and 34 may be in the form of O-rings situated in corresponding grooves, although other sealing types are also contemplated.

Serpentine channel 36 is formed when housing portions 26 and 28 or 30 are engaged with each other, with sides 38 and 40 approaching each other along an axial direction 42. When housing portion 26 and housing portion 28, 30 are assembled, exterior limits 44 and 46 come into contact with each other to determine the width of serpentine channel 36, which is the distance between sides 38 and 40. Serpentine channel 36 allows for the flow of fluid 22 along an outer surface of stator 48 to thereby increase the cooling of stator 48. The serpentine channels 36 formed on each end of electric machine 16 may be sequenced relative to each other such that as one channel 36 is extending further toward the center of housing portion 26 the other channel 36 is extending away from the center of housing portion 26. Serpentine channels 36 extend over at least a portion of an internal circumference of housing 24 and serve as part of the pathway of fluid 22 as fluid 22 is moved through electric machine 16. In another form, the electric machine may have only a single cooling channel 36, as may be the case when either housing portion 28 or 30 are combined as one piece with first housing portion 26 as mentioned above.

Seal 32 substantially prevents fluid 22 from escaping from housing 24. Seal 34, while sealing housing 24 to stator 48, is more for directing the flow of fluid in coolong channel 36 and along the face of stator 48, and if some fluid 22 passes around seal 34 it is not crucial since fluid 22 is still contained in housing 24. In another embodiment of the present invention, leakage of fluid between housing 24 and stator 48 may be limited by controlling the diameters of housing 24 and stator 48 to limit the ability of fluid to flow between these components. In this case, seal 34 may not be required.

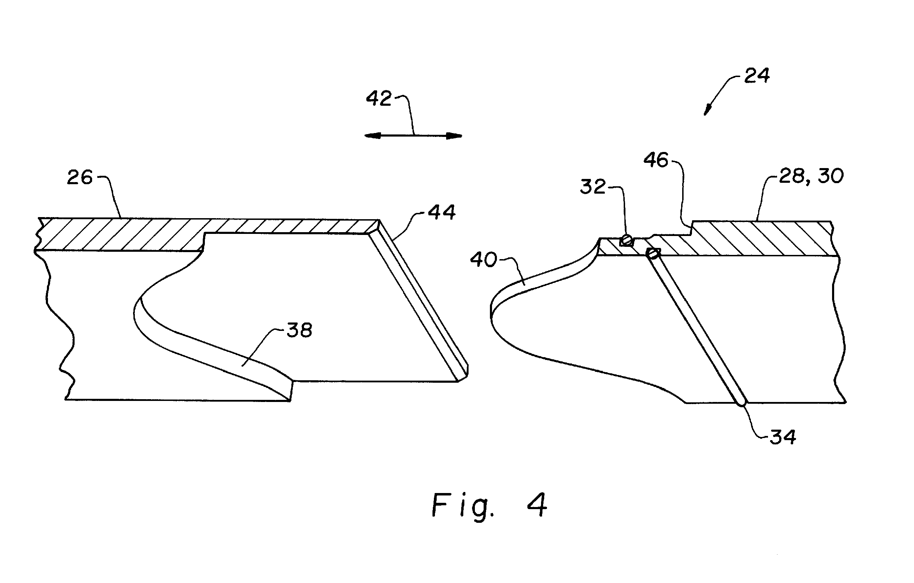

While it is possible to form serpentine channel 36 as a cast feature in a single piece housing casting, those familiar with casting processes understand that this form of a molding core adds cost and complexity to the production of the housing. The casting of housing portions 26, 28 and 30, in concert with the present invention, are simpler and less expensive than a core processing technique. Housing portions 26, 28 and 30 may have indexing features, not shown, that help the assembler to ensure that serpentine channel 36 is properly formed as housing portions 26, 28 and 30 are assembled and are held together using conventional methods. Although cooling channel 36 is illustrated with flat sides 38 and 40, other shapes are also contemplated, particularly shapes that ensure easy casting processes. Although cooling channel 36 has been described as annular or serpentine, channel 36 may be in other shapes such as in the form of an S-shape or as a worm track. For purposes of illustration, housing portions 26, 28, and 30 as shown in Figs. 3 and 4 may appear as flat plates. Typically, however, these components are substantially curved in nature so as to surround or enclose stator 48.

The present invention is a method of producing a cast cooling path around the perimeter of an electric machine 16 while preventing the need for a core in the casting process. Channel 36 is produced by casting one side of the channel or path into each adjacent housing portion, which can also be the electric machine frame or end cap. A controlled-fit piloting feature and a radial O-ring seal are used between the motor end cap and the motor housing/frame to provide accurate location and effective sealing between the components. In another form, the O-ring seal may be compressed between adjacent components axially rather than radially to serve a similar sealing purpose.

Advantageously the present invention removes heat from stator 48 of an electric motor or generator, by way of the flow of fluid 22 over the outer perimeter of stator 48 as is needed. The flow path does not require the use of a core in the casting process.

While this invention has been described with respect to at least one embodiment, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. An electric machine connectable to a driven device (14) of a vehicle (10), the electric machine (16) comprising:
a stator (48); and
a housing (24) containing the stator (48), said housing (24) having at least one cooling channel around at least a portion of an internal circumference of said housing (24), said housing (24) including a first housing portion (26) and a second housing portion (28), said cooling channel being defined by said first housing portion (26) and said second housing portion (28), said first housing portion (26) being sealed to said second housing portion (28).

2. The electric machine of claim 1, wherein said stator (48) is at least partially sealed to one of said first housing portion (26) and said second housing portion (28).

3. The electric machine of claim 1 or 2, wherein said at least one cooling channel includes at least one serpentine cooling channel (36), said first housing portion (26) and said second housing portion (28) are castings, said serpentine cooling channel (36) having two opposing sides (38, 40) including a first side (38) and a second side (40), said first side (38) being associated with said first housing portion (26), said second side (40) being associated with said second housing portion (28).

4. The electric machine of claim 3, wherein said first housing portion (26) and said second housing portion (28) slide together to thereby form said serpentine cooling channel (36).

5. The electric machine of claim 4, further comprising a seal (32) disposed between said first housing portion (26) and said second housing portion (28).

6. The electric machine of claim 5, wherein said at least one serpentine cooling channel (36) includes a first serpentine cooling channel and a second serpentine cooling channel, said first serpentine cooling channel being defined by said first housing portion (26) and said second housing portion (28), said second serpentine cooling channel being defined by a third housing portion (30) and said first housing portion (26).

7. The electric machine of claim 6, wherein said serpentine cooling channel (36) is an S-shaped cooling channel.

8. The electric machine of claim 7, wherein said electric machine (16) is configured to cause a fluid (22) to move in said at least one serpentine cooling channel (36), said fluid (22) being in contact with said stator (48) and said housing (24).

9. A method of cooling an electric machine (16) for a vehicle (10), the method comprising the step of:
moving a fluid (22) though at least one channel formed in a housing (24) containing a stator (48), said at least one channel being arranged around at least a portion of an internal circumference of said housing (24), said channel being defined by a first housing portion (26) and a second housing portion (28), said first housing portion (26) being sealed to said second housing portion (28).

10. The method of claim 9, wherein said at least one channel includes at least one serpentine shaped channel (36), said stator (48) is at least partially sealed to one of said first housing portion (26) and said second housing portion (28).

11. The method of claim 10, wherein said first housing portion (26) and said second housing portion (28) are castings, said serpentine channel (36) having two opposing sides (38, 40) including a first side (38) and a second side (40), said first side (38) being associated with said first housing portion (26), said second side (40) being associated with said second housing portion (28).

12. The method of claim 10, wherein said at least one serpentine channel (36) includes a first serpentine channel and a second serpentine channel, said first serpentine channel being defined by said first housing portion (26) and said second housing portion (28), said second serpentine channel being defined by a third housing portion (30) and said first housing portion (26).
